# EUROPEAN PATENT SPECIFICATION

(11) **EP 4 439 217 B1**
(45) Date of publication and mention of the grant of the patent: **03.09.2025**
(21) Application number: 23165525.9
(22) Date of filing: 30.03.2023
(51) Int. Cl.: G05D 1/225, G05D 1/226, G05D 1/246

(54) **COMPUTER-IMPLEMENTED METHOD, COMPUTER PROGRAM PRODUCT AND COMPUTER-IMPLEMENTED DEVICE FOR CONTROLLING THE MOTION OF AT LEAST ONE AGV VIA A FEEDBACK LOOP**
COMPUTERIMPLEMENTIERTES VERFAHREN, COMPUTERPROGRAMMPRODUKT UND COMPUTERIMPLEMENTIERTE VORRICHTUNG ZUR STEUERUNG DER BEWEGUNG VON MINDESTENS EINEM AGV ÜBER EINE RÜCKKOPPLUNGSSCHLEIFE
PROCÉDÉ MIS EN OEUVRE PAR ORDINATEUR, PRODUIT PROGRAMME D'ORDINATEUR ET DISPOSITIF MIS EN OEUVRE PAR ORDINATEUR POUR COMMANDER LE MOUVEMENT D'AU MOINS UN VÉHICULE À MOTEUR SANS FIL PAR L'INTERMÉDIAIRE D'UNE BOUCLE DE RÉTROACTION

(43) Date of publication of application: 02.10.2024
(73) Proprietor: Siemens Sanayi ve Ticaret A. S., 34870 Istanbul (TR)
(72) Inventor: Gonul, Mustafa, 34406 Kagithane (TR); Tastan, Mustafa Cihan, 34854 Istanbul (TR)
(74) Representative: Siemens Patent Attorneys

(56) References cited:
- WO-A1-2016/061390
- WO-A1-2022/005355
- US-A1- 2015 296 391

## Description

### FIELD OF THE INVENTION

The present invention relates to a computer-implemented method for controlling the motion of at least one Automated Guided Vehicle (AGV), comprising sending Radio Link Failure (RLF) Zone Prediction Data to this at least one AGV via a Mobile Communication System, sending RLF and Position Data via the Mobile Communication System to a RLF Information Database which is connected to a Machine Learning Engine, the Machine Learning Engine processing the RLF and Position Data to RLF Zone Prediction Data that is sent back to the Mobile Communication System and completes a RLF Feedback Loop.

The present invention further relates to a respective computer program product and a respective computer-implemented device.

### STATE OF THE ART

The invention represents a contribution to improve the reliability of AGVs. AGVs are a class of machines used, among others, in the field of transportation. They are capable of fulfilling transport tasks along pre-defined transport routes. The origin of these tasks can either be a user input or a machine-generated one. The task is characterized by a point of destination along the predefined route. In this sense, the operation domain of an AGV is one-dimensional. This can lead to problems: Since an AGV is an automated and therefor typically remote controlled device, a stable connection to a control station via any mobile communication service is crucial for optimal AGV operation. This connection can be lost due to a manifold of problems that can occur along the route an AGV takes. The challenge that has to be solved in this case is to ensure there are commands provided for the AGV to find its way to a place where it has access to the mobile communication service and can reconnect with the control station. The phenomenon of loosing this connection is called Radio Link Failure (RLF).

The state of the art is to basically avoid the occurrence of a RLF: For industrial safety reasons, usually the AGV is programmed to stop as soon as a RLF occurs. This is because without any connection the AGV could cause damage to itself or other objects in the area it currently is after RLF occurrence during trying to find the way back to an area with sufficient radio signal strength. Therefor, a machine learning engine defines zones of high probability of occurrence of RLFs to generate a forecast that is then provided to the AGV.

WO2016061390A1 for example discloses methods, systems and devices for early RLF declaration. This publication is representative for the state of the art - the user equipment, which comprises also mobile devices like AGVs, identifies an information message about a possibly upcoming RLF situation by any message. By this information, the user equipment is notified that there is a chance of loosing the connection - in other words, it is warned about this possible RLF event. In the field of WO2016061390A1, there is not foreseen any procedure for the user equipment how to proceed if a RLF has already occurred. Further, there is also no procedure disclosed how to distinguish between areas of high probability for RLF occurrence and non-accessible areas. WO 2022/005355 A1 is also a very relevant prior art document.

### SUMMARY OF THE INVENTION

One object of the present invention is to minimize the impact of RLFs on a system of AGVs and, as a consequence, to increase the level of flexibility and reliability in the guiding process of these AGVs.

This object is achieved by a computer-implemented method for controlling the motion of at least one AGV, comprising sending RLF Zone Prediction Data to this at least one AGV via a Mobile Communication System, sending RLF and Position Data via the Mobile Communication System to a RLF Information Database which is connected to a Machine Learning Engine, the Machine Learning Engine processing the RLF and Position Data to RLF Zone Prediction Data that is sent back to the Mobile Communication System and completes a RLF Feedback Loop, characterized in that the computer-implemented method comprises the additional steps of receiving Position-dependent Spatial and RSRP/RSRQ Data from the at least one AGV via the Mobile Communication System and sending that data to a Spatial Data Merger that connects the Position-dependent Spatial and RSRP/RSRQ Data, and adding this Position-dependent Spatial and RSRP/RSRQ Data to a Spatial Information Database, employing the Machine Learning Engine that computes the RLF Zone Prediction Data out of entries of the RLF Information Database and the Spatial Information Database, sending back this RLF Zone Prediction Data to the Mobile Communication System and completing a Spatial Feedback Loop.

The previously mentioned Mobile Communication System can be any telecommunication network, such as a cellular network. In this application the term RLF stands for Radio Link Failure. It describes an event by that a device that uses a Mobile Communication System loses its connection to that network.

Further, the term RSRP stands for Reference Signal Received Power and the term RSRQ for Reference Signal Received Quality. These are well-known measures for the signal power in a telecommunication band and the signal to noise ratio in that band. The ratio of both values, RSRP/RSRQ, is also known as Received Signal Strength Indicator (RSSI) and represents the total electromagnetic power a device receives. For that reason, RSRP/RSRQ data represent an important basis for the assessment of the probability for RLFs.

The occurrence of a RLF can have serious impact on the operation safety or even the entire operability of a system of remote-controlled user equipment such as Automated Guided Vehicles (AGVs). These devices need a stable connection to a control unit. If this connection is interrupted or completely lost, either the device stops working or, what can lead to even more unwanted or dangerous situations, respectively, it continues operation in an uncontrolled or uncontrollable way.

The prediction of zones in that RLFs are likely to occur is therefore crucial for a safe, stable and reliable operation of the AGV system. The entirety of data that describes these predictions is coined RLF Zone Prediction Data. This data comprises data about the nature of the data connection at a given position of the AGV such as:
- no connection,
- irrelevant connection status because the position is not accessible due to the local spatial neighborhood,
- no signal information but spatially accessible, or
- position accessible but no signal due to a signal-shielding obstacle.

So the object of the invention is achieved by implementation of two feedback loops running in parallel. The core of both feedback loops is represented by a Machine Learning Engine trained by two growing databases: On the one hand, the signal strength in terms of RSRP and RSRQ topology (heat map) of the AGV's operation domain is determined. On the other hand, a spatial neighborhood data acquisition is performed to determine the spatial neighborhood topology (spatial neighborhood map) of the AGV's operation domain. The entries of this map are stored in a Spatial Information Database. Both databases are fed to a Machine Learning Engine that, in a next step, computes detailed predictions about the RLF zones, and the spatial neighborhood topology of them. These constantly updated RLF Zone Predictions are handed over to the AGV. This makes it possible for the AGV, among other advantages, to distinguish between zones in the operational domain that have not been approached yet by the at least one AGV or that cannot be approached at all because of any obstacles being located there. With this strategy the operational domain of the AGV can be extended - at least locally - to two dimensions, what gives the AGV additional degrees of freedom in terms of holding a stable connection to the control station during its motion.

This system - the constant data flow from the AGV to the computer-implemented method representing the present invention and providing RLF zone predictions to the AGV - realizes a double feedback loop for the motion control of the AGV system.

Additionally, the RLF prediction on the one hand is from growing precision: Since the information database of the Machine Learning Engine is growing over time, the machine is trained and can make its predictions more and more precise. On the other hand, due to the constant machine learning process, the prediction is adaptive: If anything in the operation domain of the AGV system changes, the spatial neighborhood model is adapted and constantly kept up to date. An example for such a change in the operation domain of the AGV can be a new, additional obstacle that is placed anywhere in the operation domain.

According to one embodiment of the invention, the Position-dependent RSRP/RSRQ Data received from the at least one AGV is acquired by an on-board device for RSRP/RSRQ Data acquisition of the at least one AGV. This embodiment contributes to an even better achievement of the previously mentioned object because the RSRP/RSRQ data can be acquired locally at the point the AGV is currently passing. In this way, a real-time mapping of the RSRP/RSRQ data can be achieved.

According to a further embodiment of the invention, the Position-dependent Spatial Data received from the at least one AGV is acquired by an on-board device for Position-dependent Spatial Data acquisition of the at least one AGV. This embodiment contributes to an even better achievement of the previously mentioned object because the spatial neighbourhood can be acquired locally at the point the AGV is currently passing. In this way, a real-time mapping of the spatial neighborhood data can be achieved. This leads to a high flexibility of the spatial neighborhood data map, the RLF predictions are based on: If a change in the spatial topology of the AGV operation domain occurs, for instance because of a new obstacle placed along or around the grid representing the AGV's operation domain, shielding the AGV from the radio connection, this new obstacle can be recognized and be evaded.

According to a preferable embodiment of the invention, the on-board device for Position-dependent Spatial Data acquisition of the at least one AGV is a LIDAR camera and the acquired Position-dependent Spatial Data is an up to three-dimensional image of the current neighbourhood of the at least one AGV. This embodiment contributes to an even better achievement of the previously mentioned object because a LIDAR camera is capable of providing an up to three-dimensional image of the current neighbourhood of the AGV. The default data type a LIDAR camera delivers is a three dimensional point cloud of the current neighbourhood of the LIDAR camera. However, a three dimensional point cloud can be very memory-consuming. This means that, comprising this reason, there are situations that can make it beneficial to employ just two dimensional spatial neighbourhood data. One example for a situation like this is that the obstacles in the operation domain of the at least one AGV are solid boxes. In that case, the LIDAR would just have to identify the planar coordinates of the obstacle - it makes no difference for the AGV if the obstacle has a lower, equal or bigger height than the AGV itself. For the same reason it can make sense to reduce the dimension of the spatial neighbourhood data to just one: If the operation domain is strictly restricted to a given line, there is no additional benefit of providing planar data. To summarize, the dimension of spatial neighbourhood data that is beneficial for the AGV system is strongly dependent on the specific characteristics of the operation domain of the AGV system and therefore, a device like a LIDAR that is capable of providing spatial neighbourhood data of any dimension, strongly contributes to an even better achievement of the previously mentioned object.

According to one embodiment of the invention, the at least one AGV comprises more than one AGV and these AGVs are forming a network collaborating on the Spatial Information Database and the RLF Information Database. This embodiment contributes to an even better achievement of the previously mentioned object because a higher degree of adaptivity of the spatial neighborhood map as well as of the radio signal heat map can be reached. Further, also the flexibility in terms of adaptivity speed is increased compared to the use of just one AGV, because any change in the AGV's operational domain in terms of RSRP/RSRQ and Spatial neighborhood environment is recognized faster and can contribute to a faster update of the corresponding central Spatial Information and RLF Information Database.

According to one embodiment of the invention the at least one AGV additionally is carrying an on-board device for acquisition of the signal amplitude of the Mobile Communication System, and is sending this data in parallel to the Position-dependent Spatial and RSRP/RSRQ Data. This embodiment contributes to an even better achievement of the previously mentioned object because an additional parameter is provided to further increase the level of detail of the RLF predictions. In this way, it makes the motion control system of the AGV even more reliable.

According to a preferable embodiment of the invention, the Mobile Communication System is a 5G network. This embodiment contributes to an even better achievement of the previously mentioned object because it allows a higher data rate between the AGV and the computer-implemented method. This allows to acquire and transfer spatial neighborhood data of higher resolution, what itself contributes to a higher level of detail of the RLF Zone predictions and further makes the entire motion control system more reliable.

The invention also comprises a computer-program product that implements the methods described within the previously discussed embodiments of the invention. This computer-program product allows to run the computer program on a computer system comprising a Machine Learning Engine, a RLF Information Database, a Spatial Data Merger, a Mobile Communication System and a Spatial Information Database, to perform the motion control of at least one AGV.

The invention also relates to a computer-implemented device that is employed to execute any of the methods described within the previously discussed embodiments of the invention. This device implements the previously described methods in hardware, what makes the method independent from any support hardware and therefor allows to execute the methods described within the previously discussed embodiments of the invention in a closed environment. The computer-implemented device comprises the Machine Learning Engine, the RLF Information Database, the Spatial Data Merger, the Mobile Communication System, the Spatial Information Database and the at least one AGV.

According to one embodiment of the invention, the previously described computer-implemented device realizes a second feedback loop, called spatial information feedback loop. This embodiment of the invention implements a spatial neighbourhood data feedback loop that is operating in parallel to the RLF information feedback loop. This feedback loop, coined Spatial Feedback Loop, is realized by data connections between the Machine Learning Engine, the RLF Information Database, the Spatial Data Merger, the Mobile Communication System and the Spatial Information Database. The Spatial Feedback Loop allows the Machine Learning Engine of the computer-implemented method to provide RLF Zone predictions of increased level of detail, what leads to significantly higher reliability of the AGV system.

A further embodiment of the invention that realizes the computer-implemented device comprises an on-board device for Position-dependent RSRP/RSRQ Data acquisition on the at least one AGV. This embodiment allows to measure the RSRP/RSRQ data locally at the point the AGV currently is and therefore enables a real-time update of the RSRP/RSRQ heat map.

A further embodiment of the invention that realizes the computer-implemented device further comprises an on-board device for Position-dependent Spatial Data acquisition on the at least one AGV. This embodiment allows to measure the spatial neighborhood data locally at the point the AGV currently is and therefore enables a real-time mapping of the spatial neighborhood.

In that case in a special embodiment of the invention regarding the computer-implemented device this further comprises that an on-board device for Position-dependent Spatial Data acquisition employs a LIDAR camera for that purpose. LIDAR cameras are a known for providing high resolution three and lower dimensional spatial data about the local neighbourhood of the place where these devices are operated. This 3D-image of the spatial neighbourhood allows a further increase in RLF prediction quality. For some applications it can also be beneficial to reduce the dimension of the acquired data to two or one, as it has been described before. This flexibility in the dimension of the acquired spatial data is also provided by LIDAR cameras.

According to one embodiment of the invention, the previously described computer-implemented device additionally comprises an on-board device for acquisition of the signal amplitude and/or the data rate of the Mobile Communication System on the at least one AGV. This additional device allows a further increase in RLF Zone prediction quality since it measures another parameter that has influence on the probability of RLF occurrence.

### BRIEF DESCRIPTION OF FIGURES

The invention will be explained in closer detail by reference to a preferred embodiment, which is depicted schematically in the figures.

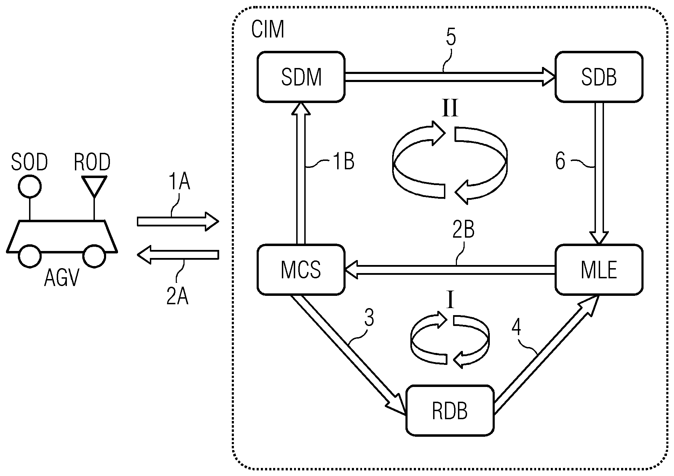

- Fig. 1: shows the principle of operation of the invention in the form of a signal flow chart between the components of the computer-implemented method.

### WAYS TO IMPLEMENT THE INVENTION

Fig. 1 shows the principal sketch of the computer system realizing a Spatial Feedback Loop II additional to a RLF Feedback Loop I based on the use of both a RLF Information Database RDB and a Spatial Information Database SDB.

One cycle of each Feedback Loop starts at the Automated Guided Vehicle AGV, depicted on the very left of Fig. 1. A set of Position-dependent Spatial and RSRP/RSRQ Data is acquired via a First Connection 1A for Position-dependent Spatial and RSRP/RSRQ Data and sent to the Computer-implemented Method CIM, implemented on a computer system, via a Mobile Communication System MCS.

The Spatial Data as well as the RSRP/RSRQ Data is sent to a Spatial Data Merger SDM via a Second Connection 1B for Position-dependent Spatial and RSRP/RSRQ Data. The Spatial Data Merger SDM processes the data and sends the Merged Position-dependent Spatial and RSRP/RSRQ dataset 5 to a memory, the Spatial Information Database SDB.

In a next step, a Data Connection 4 between RLF Information Database RDB and Machine Learning Engine MLE and a Data Connection 6 between Spatial Information Database SDB and Machine Learning Engine MLE from both the Spatial Information Database SDB and the RLF Information Database RDB is employed to send the corresponding data to a Machine Learning Engine MLE.

In further step, the Machine Learning Engine MLE processes both dataset entries to a RLF Zone Prediction and sends this prediction via a Second Connection 2B for RLF Zone Prediction Data to the Mobile Communication System MCS.

The updated RLF zone Prediction is then on the one hand sent to the RLF Information Database RDB via a Connection 3 for RLF and Position Data and on the other hand to the at least one AGV via a First Connection 2A for RLF Zone Prediction Data. By doing so, two parallel feedback loops, the RLF Feedback Loop I and the Spatial Feedback Loop II are completed.

### LIST OF REFERENCE SIGNS

- AGV: Automated Guided Vehicle
- CIM: Computer-implemented Method
- MCS: Mobile Communication System
- MLE: Machine Learning Engine
- RDB: RLF Information Database
- ROD: On-board device for RSRP/RSRQ data acquisition
- SDB: Spatial Information Database
- SDM: Spatial Data Merger
- SOD: On-board device for Spatial data acquisition
- 1A: First Connection for Position-dependent Spatial and RSRP/RSRQ Data
- 1B: Second Connection for Position-dependent Spatial and RSRP/RSRQ Data
- 2A: First Connection for RLF Zone Prediction Data
- 2B: Second Connection for RLF Zone Prediction Data
- 3: Connection for RLF and Position Data
- 4: Data Connection between RLF Information Database and Machine Learning Engine
- 5: Merged Position-dependent Spatial and RSRP/RSRQ dataset
- 6: Data Connection between Spatial Information Database and Machine Learning Engine
- I: RLF Feedback Loop
- II: Spatial Feedback Loop

Independent of the grammatical term usage, individuals with male, female or other gender identities are included within the term.

## Claims

1. Computer-implemented method (CIM) for controlling the motion of at least one AGV (AGV), comprising sending RLF Zone Prediction Data to this at least one AGV (AGV) via a Mobile Communication System (MCS), sending RLF and Position Data via the Mobile Communication System (MCS) to a RLF Information Database (RDB) which is connected to a Machine Learning Engine (MLE), the Machine Learning Engine (MLE) processing the RLF and Position Data to RLF Zone Prediction Data that is sent back to the Mobile Communication System (MCS) and completes a RLF Feedback Loop (I), wherein the computer-implemented method (CIM) comprises the additional steps of
- receiving Position-dependent Spatial and RSRP/RSRQ Data from the at least one AGV (AGV) via the Mobile Communication System (MCS) and sending that data to a Spatial Data Merger (SDM) that connects the Position-dependent Spatial and RSRP/RSRQ Data, and adding this Position-dependent Spatial and RSRP/RSRQ Data to a Spatial Information Database (SDB),
- employing the Machine Learning Engine (MLE) that computes the RLF Zone Prediction Data out of entries of the RLF Information Database (RDB) and the Spatial Information Database (SDB),
- sending back this RLF Zone Prediction Data to the Mobile Communication System (MCS) and
- completing a Spatial Feedback Loop (II).

2. Method according to claim 1, **characterized in that** the Position-dependent RSRP/RSRQ Data received from the at least one AGV (AGV) is acquired by an on-board device for RSRP/RSRQ Data acquisition (ROD) of the at least one AGV (AGV) .

3. Method according to claim 1 or 2, **characterized in that** the Position-dependent Spatial Data received from the at least one AGV (AGV) is acquired by an on-board device for Position-dependent Spatial Data acquisition (SOD) of the at least one AGV (AGV).

4. Method according to claim 3, **characterized in that** the on-board device for Position-dependent Spatial Data acquisition (SOD) of the at least one AGV (AGV) is a LIDAR camera and the acquired Position-dependent Spatial Data is an up to three-dimensional image of the current neighbourhood of the at least one AGV (AGV).

5. Method according to any of the preceding claims, **characterized in that** the at least one AGV (AGV) comprises more than one AGV and that these AGVs are forming a network collaborating on the Spatial Information Database (SDB) and the RLF Information Database (RDB).

6. Method according to any of the preceding claims, **characterized in that** the at least one AGV (AGV) additionally is carrying an on-board device for acquisition of the signal amplitude of the Mobile Communication System (MCS), and is sending this data in parallel to the Position-dependent Spatial and RSRP/RSRQ Data.

7. Method according to any of the preceding claims, **characterized in that** the Mobile Communication System (MCS) is a 5G network.

8. Computer program product comprising instructions to cause a system containing the Machine Learning Engine (MLE), the RLF Information Database (RDB), the Spatial Data Merger (SDM), the Mobile Communication System (MCS), the Spatial Information Database (SDB) and the at least one AGV (AGV) to perform all the steps of any one of the preceding claims.

9. A Computer-implemented device comprising the Machine Learning Engine (MLE), the RLF Information Database (RDB), the Spatial Data Merger (SDM), the Mobile Communication System (MCS), the Spatial Information Database (SDB) and the at least one AGV (AGV), which device is adapted to execute a method according to one of claims 1 to 7.

10. The computer-implemented device according to claim 9 **characterized in that** the Spatial Data Merger (SDM) and the Spatial Information Database (SDB) together with the Mobile Communication System (MCS) and the Machine Learning Engine (MLE) form, together with data connections between those components (1B, 5, 6, 2B), the Spatial Feedback Loop (II) for sending RLF Zone Prediction Data to the at least one AGV (AGV).

11. The computer-implemented device of claim 9 or 10, **characterized in that** it comprises an on-board device for Position-dependent RSRP/RSRQ Data acquisition (ROD) on the at least one AGV.

12. The computer-implemented device of claim 9, 10 or 11, **characterized in that** it comprises an on-board device for Position-dependent Spatial Data acquisition (SOD) on the at least one AGV (AGV).

13. The computer-implemented device of claim 12, **characterized in that** the on-board device for Position-dependent Spatial Data acquisition (SOD) of the at least one AGV (AGV) is a LIDAR camera.

14. The computer-implemented device of one of the claims 9 to 13, **characterized in that** the at least one AGV (AGV) additionally is carrying an on-board device for acquisition of the signal amplitude of the Mobile Communication System (MCS).

## Patentansprüche

1. Computergestütztes Verfahren (CIM) zum Steuern der Bewegung mindestens eines fahrerlosen Transportfahrzeugs (AGV), das Folgendes umfasst: Senden von RLF-Zonenprognosedaten über ein Mobilkommunikationssystem (MCS) zu diesem mindestens einen fahrerlosen Transportfahrzeug (AGV), Senden von RLF- und Positionsdaten über das Mobilkommunikationssystem (MCS) zu einer RLF-Informationsdatenbank (RDB), die mit einer Engine für maschinelles Lernen (MLE) verbunden ist, wobei die Engine für maschinelles Lernen (MLE) die RLF- und die Positionsdaten zu RLF-Zonenprognosedaten verarbeitet, die zum Mobilkommunikationssystem (MCS) zurückgesendet werden und eine RLF-Rückkopplungsschleife (I) schließen, wobei das computergestützte Verfahren (CIM) folgende zusätzliche Schritte umfasst:
- Empfangen von positionsabhängigen räumlichen und RSRP/RSRQ-Daten von dem mindestens einen fahrerlosen Transportfahrzeug (AGV) über das Mobilkommunikationssystem (MCS) und Senden dieser Daten zu einem Fusionierer für räumliche Daten (SDM), der die positionsabhängigen räumlichen und RSRP/RSRQ-Daten verbindet, und Hinzufügen dieser positionsabhängigen räumlichen und RSRP/RSRQ-Daten zu einer Datenbank für räumliche Informationen (SDB),
- Verwenden der Engine für maschinelles Lernen (MLE), die die RLF-Zonenprognosedaten aus Einträgen in der RLF-Informationsdatenbank (RDB) und der Datenbank für räumliche Informationen (SDB) berechnet,
- Senden dieser RLF-Zonenprognosedaten zurück zum Mobilkommunikationssystem (MCS) und
- Schließen einer räumlichen Rückkopplungsschleife (II).

2. Verfahren nach Anspruch 1, **dadurch gekennzeichnet, dass** die aus dem mindestens einen fahrerlosen Transportfahrzeug (AGV) empfangenen positionsabhängigen RSRP/RSRQ-Daten von einer Bordvorrichtung für die RSRP/RSRQ-Datenerfassung (ROD) des mindestens einen fahrerlosen Transportfahrzeugs (AGV) erfasst werden.

3. Verfahren nach Anspruch 1 oder 2, **dadurch gekennzeichnet, dass** die aus dem mindestens einen fahrerlosen Transportfahrzeug (AGV) empfangenen positionsabhängigen räumlichen Daten von einer Bordvorrichtung für die Erfassung von positionsabhängigen räumlichen Daten (SOD) des mindestens einen fahrerlosen Transportfahrzeugs (AGV) erfasst werden.

4. Verfahren nach Anspruch 3, **dadurch gekennzeichnet, dass** es sich bei der Bordvorrichtung für die Erfassung von positionsabhängigen räumlichen Daten (SOD) des mindestens einen fahrerlosen Transportfahrzeugs (AGV) um eine LIDAR-Kamera handelt und bei den erfassten positionsabhängigen räumlichen Daten um ein bis zu dreidimensionales Bild von der aktuellen Umgebung des mindestens einen fahrerlosen Transportfahrzeugs (AGV).

5. Verfahren nach einem der vorhergehenden Ansprüche, **dadurch gekennzeichnet, dass** das mindestens eine fahrerlose Transportfahrzeug (AGV) mehr als ein AGV umfasst und dass diese AGV ein Netzwerk bilden und zusammen an der Datenbank für räumliche Informationen (SDB) und der RLF-Informationsdatenbank (RDB) arbeiten.

6. Verfahren nach einem der vorhergehenden Ansprüche, **dadurch gekennzeichnet, dass** das mindestens eine fahrerlose Transportfahrzeug (AGV) zusätzlich eine Bordvorrichtung zum Erfassen der Signalamplitude des Mobilkommunikationssystems (MCS) mitführt und diese Daten gleichzeitig mit den positionsabhängigen räumlichen und den RSRP/RSRQ-Daten sendet.

7. Verfahren nach einem der vorhergehenden Ansprüche, **dadurch gekennzeichnet, dass** es sich bei dem Mobilkommunikationssystem (MCS) um ein 5G-Netz handelt.

8. Computerprogrammprodukt, das Anweisungen umfasst, die ein System, das die Engine für maschinelles Lernen (MLE), die RLF-Informationsdatenbank (RDB), den Fusionierer für räumliche Daten (SDM), das Mobilkommunikationssystem (MCS), die Datenbank für räumliche Informationen (SDB) und das mindestens eine fahrerlose Transportfahrzeug (AGV) enthält, dazu veranlassen, alle Schritte nach einem der vorhergehenden Ansprüche durchzuführen.

9. Computergestützte Vorrichtung, die die Engine für maschinelles Lernen (MLE), die RLF-Informationsdatenbank (RDB), den Fusionierer für räumliche Daten (SDM), das Mobilkommunikationssystem (MCS), die Datenbank für räumliche Informationen (SDB) und das mindestens eine fahrerlose Transportfahrzeug (AGV) umfasst, wobei die Vorrichtung so ausgelegt ist, dass sie ein Verfahren nach einem der Ansprüche 1 bis 7 ausführt.

10. Computergestützte Vorrichtung nach Anspruch 9, **dadurch gekennzeichnet, dass** der Fusionierer für räumliche Daten (SDM) und die Datenbank für räumliche Informationen (SDB) zusammen mit dem Mobilkommunikationssystem (MCS) und der Engine für maschinelles Lernen (MLE) sowie mit Datenverbindungen zwischen diesen Komponenten (1B, 5, 6, 2B) die räumliche Rückkopplungsschleife (II) zum Senden von RLF-Zonenprognosedaten zu dem mindestens einen fahrerlosen Transportfahrzeug (AGV) bilden.

11. Computergestützte Vorrichtung nach Anspruch 9 oder 10, **dadurch gekennzeichnet, dass** sie eine Bordvorrichtung für die Erfassung von positionsabhängigen RSRP/RSRQ-Daten (ROD) in dem mindestens einen fahrerlosen Transportfahrzeug umfasst.

12. Computergestützte Vorrichtung nach Anspruch 9, 10 oder 11, **dadurch gekennzeichnet, dass** sie eine Bordvorrichtung für die Erfassung von positionsabhängigen räumlichen Daten (SOD) in dem mindestens einen fahrerlosen Transportfahrzeug (AGV) umfasst.

13. Computergestützte Vorrichtung nach Anspruch 12, **dadurch gekennzeichnet, dass** es sich bei der Bordvorrichtung für die Erfassung von positionsabhängigen räumlichen Daten (SOD) des mindestens einen fahrerlosen Transportfahrzeugs (AGV) um eine LIDAR-Kamera handelt.

14. Computergestützte Vorrichtung nach einem der Ansprüche 9 bis 13, **dadurch gekennzeichnet, dass** das mindestens eine fahrerlose Transportfahrzeug (AGV) zusätzlich eine Bordvorrichtung zum Erfassen der Signalamplitude des Mobilkommunikationssystems (MCS) mitführt.

## Revendications

1. Procédé mis en œuvre par ordinateur (CIM) pour commander le mouvement d'au moins un véhicule à guidage automatique (AGV), comprenant l'envoi de données de prédiction de zone RLF à cet au moins un véhicule à guidage automatique (AGV) via un système de communication mobile (MCS), l'envoi des données RLF et de position via le système de communication mobile (MCS), à une base de données d'informations RLF (RDB) qui est connectée à un moteur d'apprentissage automatique (MLE), le moteur d'apprentissage automatique (MLE) traitant les données RLF et de position en données de prédiction de zone RLF qui sont renvoyées au système de communication mobile (MCS) et complètent une boucle de rétroaction RLF (I), dans lequel
le procédé mis en œuvre par ordinateur (CIM) comprend les étapes supplémentaires de
- réception de données RSRP/RSRQ et spatiales dépendantes de la position provenant de l'au moins un véhicule à guidage automatique (AGV) via le système de communication mobile (MCS) et envoi de ces données à une unité de fusion de données spatiales (SDM) qui relie les données RSRP/RSRQ et spatiales dépendantes de la position, et ajout de ces données RSRP/RSRQ et spatiales dépendantes de la position à une base de données d'informations spatiales (SDB),
- utilisation du moteur d'apprentissage automatique (MLE) qui calcule les données de prédiction de zone RLF à partir des entrées de la base de données d'informations RLF (RDB) et de la base de données d'informations spatiales (SDB),
- renvoi de ces données de prédiction de zone RLF au système de communication mobile (MCS) et
- accomplissement d'une boucle de rétroaction spatiale (II).

2. Procédé selon la revendication 1, **caractérisé en ce que** les données RSRP/RSRQ dépendantes de la position reçues de l'au moins un véhicule à guidage automatique (AGV) sont acquises par un dispositif embarqué d'acquisition de données RSRP/RSRQ (ROD) de l'au moins un véhicule à guidage automatique (AGV).

3. Procédé selon la revendication 1 ou 2, **caractérisé en ce que** les données spatiales dépendantes de la position reçues de l'au moins un véhicule à guidage automatique (AGV) sont acquises par un dispositif embarqué d'acquisition de données spatiales dépendantes de la position (SOD) de l'au moins un véhicule à guidage automatique (AGV).

4. Procédé selon la revendication 3, **caractérisé en ce que** le dispositif embarqué d'acquisition de données spatiales dépendantes de la position (SOD) de l'au moins un véhicule à guidage automatique (AGV) est une caméra LIDAR, et les données spatiales dépendantes de la position acquises représentent une image jusqu'à trois dimensions de l'environnement actuel de l'au moins un véhicule à guidage automatique (AGV).

5. Procédé selon l'une des revendications précédentes, **caractérisé en ce que** l'au moins un véhicule à guidage automatique (AGV) comprend plus d'un véhicule à guidage automatique et que ces véhicules à guidage automatique forment un réseau collaborant sur la base de données d'informations spatiales (SDB) et la base de données d'informations RLF (RDB).

6. Procédé selon l'une des revendications précédentes, **caractérisé en ce que** l'au moins un véhicule à guidage automatique (AGV) porte en outre un dispositif embarqué d'acquisition de l'amplitude de signal du système de communication mobile (MCS) et transmet ces données en parallèle aux données RSRP/RSRQ et spatiales dépendantes de la position.

7. Procédé selon l'une des revendications précédentes, **caractérisé en ce que** le système de communication mobile (MCS) est un réseau 5G.

8. Produit de programme informatique comprenant des instructions pour amener un système contenant le moteur d'apprentissage automatique (MLE), la base de données d'informations RLF (RDB), l'unité de fusion de données spatiales (SDM), le système de communication mobile (MCS), la base de données d'informations spatiales (SDB) et l'au moins un véhicule à guidage automatique (AGV) à effectuer toutes les étapes de l'une quelconque des revendications précédentes.

9. Dispositif mis en œuvre par ordinateur comprenant le moteur d'apprentissage automatique (MLE), la base de données d'informations RLF (RDB), l'unité de fusion de données spatiales (SDM), le système de communication mobile (MCS), la base de données d'informations spatiales (SDB) et l'au moins un véhicule à guidage automatique (AGV), lequel dispositif est adapté pour exécuter un procédé selon l'une des revendications 1 à 7.

10. Dispositif mis en œuvre par ordinateur selon la revendication 9, **caractérisé en ce que** l'unité de fusion de données spatiales (SDM) et la base de données d'informations spatiales (SDB), conjointement avec le système de communication mobile (MCS) et le moteur d'apprentissage automatique (MLE), forment, conjointement avec les connexions de données entre ces composants (1B, 5, 6, 2B), la boucle de rétroaction spatiale (II) pour l'envoi de données de prédiction de zone RLF à l'au moins un véhicule à guidage automatique (AGV).

11. Dispositif mis en œuvre par ordinateur selon la revendication 9 ou 10, **caractérisé en ce qu'**il comprend un dispositif embarqué d'acquisition de données RSRP/RSRQ dépendantes de la position (ROD) sur l'au moins un véhicule à guidage automatique.

12. Dispositif mis en œuvre par ordinateur selon la revendication 9, 10 ou 11, **caractérisé en ce qu'**il comprend un dispositif embarqué d'acquisition de données spatiales dépendantes de la position (SOD) sur l'au moins un véhicule à guidage automatique (AGV).

13. Dispositif mis en œuvre par ordinateur selon la revendication 12, **caractérisé en ce que** le dispositif embarqué d'acquisition de données spatiales dépendantes de la position (SOD) de l'au moins un véhicule à guidage automatique (AVG) est une caméra LIDAR.

14. Dispositif mis en œuvre par ordinateur selon l'une des revendications 9 à 13, **caractérisé en ce que** l'au moins un véhicule à guidage automatique (AGV) porte en outre un dispositif embarqué d'acquisition de l'amplitude de signal du système de communication mobile (MCS).
